# EUROPÄISCHE PATENTSCHRIFT

(11) **EP 3 109 141 B1**
(45) Veröffentlichungstag und Bekanntmachung des Hinweises auf die Patenterteilung: **25.09.2019**
(21) Anmeldenummer: 16172743.3
(22) Anmeldetag: 02.06.2016
(51) Int. Cl.: B62J 11/00, B62H 5/00, E05B 67/38

(54) **HALTERUNG**
MOUNT
FIXATION

(30) Priorität: 22.06.2015 DE 102015109997
(43) Veröffentlichungstag der Anmeldung: 28.12.2016
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A2- 0 934 869
- DE-A1-102009 056 111
- DE-U1- 9 313 594
- JP-A- H10 157 679
- JP-A- H10 250 661
- JP-A- 2000 309 291
- JP-A- 2005 324 751
- TW-U- M 378 149
- US-A1- 2008 022 734
- US-B1- 6 321 961

## Beschreibung

Die Erfindung betrifft eine Halterung zur Befestigung eines Zubehörteils, insbesondere eines Zweiradschlosses, an einem Zweirad.

Damit Zubehörteile für ein Zweirad, wie etwa Werkzeug oder insbesondere Zweiradschlösser, während bzw. nach einer Fahrt mit dem Zweirad zur Verfügung stehen, ist es zweckmäßig, sie an dem Zweirad zu befestigen, so dass sie stets mitgeführt werden. Dazu kann eine Halterung vorgesehen sein, die insbesondere dauerhaft beispielsweise an einem Rahmen eines jeweiligen Zweirades befestigt ist und dazu ausgebildet ist, ein jeweiliges Zubehörteil, insbesondere lösbar, zu halten.

Das Halten des Zubehörteils muss dabei besonders zuverlässig erfolgen, um ein Herabfallen des Zubehörteils, das insbesondere während einer Fahrt zu Beschädigungen und/oder Verletzungen führen könnte, zu verhindern. Des Weiteren ist es wünschenswert, dass die Halterung eine möglichst flexible Anordnung des Zubehörteils an das jeweilige Zweirad ermöglicht, um das jeweilige Zubehörteil an verschiedenen Stellen eines Zweirades bzw. an verschiedenen Zweirädern flexibel jeweils so angeordnet befestigen zu können, dass das Zubehörteil die Nutzung des Zweirades nicht behindert und insgesamt möglichst wenig Platz beansprucht.

Ferner ist es im Hinblick auf eine kompakte Bauweise des jeweiligen Zubehörteils günstig, wenn zur Anordnung dieses Zubehörteils an der Halterung an dem Zubehörteil kein zusätzlicher, lediglich für die Lagerung an der Halterung vorgesehener Abschnitt, wie etwa eine Schiene, ein Steg oder ein Bolzen, erforderlich ist, sondem das Zubehörteil beispielsweise an einem als integraler Teil eines Grundkörpers des Zubehörteils ausgebildeten Halteabschnitt von der Halterung gehalten wird.

Dies ist insbesondere mit Schwierigkeiten verbunden, wenn es sich bei dem Zubehörteil etwa um ein Zweiradschloss handelt, das typischerweise in geschlossener und dann in der Regel eine geschlossene Schlaufe bildender Form an dem Zweirad transportiert wird. Denn wenn der Schlosskörper eines solchen Zweiradschlosses keinen von dem übrigen Schlosskörper abstehenden Abschnitt zur Verbindung mit der Halterung aufweist, wird es erforderlich, die von dem Zweiradschloss gebildete geschlossene Schlaufe in irgendeiner Weise in die Halterung "einzufädeln", damit das Zweiradschloss mit seinem grundsätzlich unabhängig von der Funktion einer Anordnung an eine jeweilige Halterung ausgebildeten Schlosskörper an der Halterung befestigt werden kann.

Daher ist es insbesondere wünschenswert, wenn zur Verbindung mit einer Halterung ein jeweiliges Zubehörteil keine Elemente aufweisen muss, die erkennbar lediglich für eine Anordnung an einer Halterung vorgesehen sind und beispielsweise von dem übrigen Zubehörteil abstehen, da solche Elemente im Hinblick auf die eigentliche Funktion des Zubehörteils als "Fremdkörper" wahrgenommen werden und deshalb z.B. auch den Gesamteindruck des Zubehörteils beeinträchtigen können.

Aus US 2008/0022734 A1, auf der der Oberbegriff von Anspruch 1 basiert, ist eine Schlosshalterung bekannt, die ein Befestigungselement und ein Kopplungselement umfasst, wobei das Befestigungselement an dem Schloss angeordnet wird und dort zunächst drehbar gelagert ist, und wobei das Befestigungselement durch Zusammenwirken mit dem Kopplungselement in einer definierten Stellung festlegbar ist.

Es ist eine Aufgabe der Erfindung, eine Halterung zur Befestigung eines Zubehörteils, insbesondere eines Zweiradschlosses, an einem Zweirad bereitzustellen, die eine flexible und zuverlässige Befestigung des jeweiligen Zubehörteils ermöglicht und dazu ausgebildet ist, mit einem Halteabschnitt eines jeweiligen Zubehörteils in einer Weise zusammenzuwirken, dass der Halteabschnitt in eine Grundform des jeweiligen Zubehörteils integriert oder auf andere, vorzugsweise unauffällige, Weise eingebettet ausgebildet sein kann.

Die Aufgabe wird gelöst durch eine Halterung mit den Merkmalen des Anspruchs 1.

Der Sockelabschnitt kann dabei unmittelbar zur Befestigung an dem Zweirad ausgebildet sein, beispielsweise indem er Befestigungsmittel wie etwa einen Riemen, eine Schelle, Schraubelemente, Klettverschlusselemente oder magnetische Elemente aufweist. Der Sockelabschnitt kann aber auch alternativ oder zusätzlich für die Anordnung eines separaten Befestigungsteils ausgebildet sein, welches eine Befestigungseinrichtung mit z.B. den genannten Befestigungsmitteln aufweisen kann. Ein solches Befestigungsteil kann dann auch nach Art eines Adapters spezifisch für verschiedene Befestigungsarten, Befestigungsmöglichkeiten und/oder verschiedene Beschaffenheiten des jeweiligen Abschnitts an dem Zweirad, an dem die Halterung befestigt werden soll, ausgebildet und insbesondere bedarfsweise gegen andere Befestigungsteile austauschbar sein.

Der Aufnahmeabschnitt der Halterung dient dem haltenden Zusammenwirken mit dem jeweiligen Zubehörteil, insbesondere mit einem Halteabschnitt des Zubehörteils. Dabei weist der Aufnahmeabschnitt einen durchgehenden Kanal auf, d.h. dass der Kanal an beiden Enden seiner Längserstreckung entlang der genannten Kanalachse zumindest nicht vollständig verschlossen ist. Dies ermöglicht es, mittels der Halterung beispielsweise ein Zweiradschloss zu halten, welches eine geschlossene Schlaufe bildet, da sich die Schlaufe dann durch den Kanal hindurch erstrecken kann, d.h. dass sie auf der einen Seite (am Eingangsabschnitt am ersten Ende) in den durchgehenden Kanal eintritt und auf der anderen Seite (am Verengungsabschnitt am zweiten Ende) wieder aus dem Kanal austreten kann.

Grundsätzlich wird durch die genannte Kanalachse ein kontinuierlicher, vorzugsweise gerader, Verlauf des durchgehenden Kanals definiert. Die Kanalachse ist jedoch nicht auf vollständig gerade Verläufe beschränkt, sondern kann auch eine Bogenform aufweisen, solange der Verlauf des Kanals ein Durchfädeln eines flexiblen Kabels eines jeweiligen Zubehörteils oder zumindest ein Einführen eines entsprechend gekrümmten starren Abschnitts eines jeweiligen Zubehörteils zulässt.

Die beiden Enden des durchgehenden Kanals in Bezug auf dessen Erstreckung entlang der Kanalachse sind funktional nicht äquivalent, sondern unterscheiden sich dadurch, dass das erste Ende dazu ausgebildet ist, dass ein Halteabschnitt eines jeweiligen Zubehörteils an diesem ersten Ende und von diesem ersten Ende aus in den durchgehenden Kanal hinein eingeführt werden kann. Insofern weist das erste Ende einen Eingangsabschnitt auf, der dies ermöglicht. Im Gegensatz hierzu hat das zweite Ende des durchgehenden Kanals die Funktion, das Einführen des Halteabschnitts des jeweiligen Zubehörteils auf eine bestimmte Einführtiefe in den durchgehenden Kanal zu begrenzen, insbesondere soweit zu begrenzen, dass der Halteabschnitt bis zum zweiten Ende hin, nicht aber durch das zweite Ende hindurch aus dem durchgehenden Kanal heraus geführt werden kann. Diese Funktion wird durch den Verengungsabschnitt und insbesondere dadurch erreicht, dass der Querschnitt des durchgehenden Kanals an diesem zweiten Ende gegenüber einem Querschnitt am Eingangsabschnitt, also am ersten Ende des durchgehenden Kanals verengt ist.

Dass der Querschnitt des Verengungsabschnitts gegenüber dem Eingangsabschnitt verengt ist, bedeutet, dass zumindest ein Objekt, welches den Querschnitt des Eingangsabschnitts vollständig ausfüllt, wenn es in den Eingangsabschnitt eingeführt ist, bei einem Versetzen entlang der Kanalachse nicht auch durch den Verengungsabschnitt hindurchgeführt werden kann. Dabei weist der Verengungsabschnitt insbesondere eine geringere Querschnittsfläche als der Eingangsabschnitt auf, wobei die Querschnittsfläche im Wesentlichen senkrecht zur Kanalachse definiert ist. Insbesondere kann der Querschnitt des Verengungsabschnitts bei einer gedachten Überlagerung mit dem Querschnitt des Eingangsabschnitts vollständig von dem Querschnitt des Eingangsabschnitts umfasst sein, jedoch nicht umgekehrt. Zudem können die beiden Querschnitte grundsätzlich dieselbe Form aufweisen, jedoch in unterschiedlicher Skalierung, wobei der Querschnitt des Verengungsabschnittes geringere Ausmaße als der Querschnitt des Eingangsabschnittes aufweist. Beispielsweise können der Querschnitt des Verengungsabschnittes und der Querschnitt des Eingangsabschnittes zu der Kanalachse konzentrische Kreisflächen oder kreisartige Flächen mit unterschiedlichen Durchmessern darstellen.

Da erfindungsgemäß der Halteabschnitt eines jeweiligen Zubehörteils nicht über das zweite Ende, sondern ausschließlich über das erste Ende des durchgehenden Kanals in diesen eingeführt werden kann und zudem nicht weiter als bis zu dem zweiten Ende des durchgehenden Kanals in den Kanal eindringen kann, stellen das erste Ende und das zweite Ende insofern ein offenes Ende bzw. ein sperrendes Ende zumindest für den Halteabschnitt des Zubehörteils dar. Gleichwohl ist der Kanal als durchgehender Kanal ausgebildet, also zu beiden Seiten geöffnet und grundsätzlich, insbesondere für Abschnitte eines jeweiligen Zubehörteils, die einen kleineren Querschnitt aufweisen als der Halteabschnitt des Zubehörteils, durchlässig.

Der Aufnahmeabschnitt der Halterung kann insbesondere dazu angepasst sein, den Halteabschnitt eines jeweiligen Zubehörteils formschlüssig aufzunehmen. Vorzugsweise ist der Aufnahmeabschnitt für eine Aufnahme eines zapfenförmigen Halteabschnitts geeignet ausgebildet, da ein zapfenförmiger Halteabschnitt eine vergleichsweise große Wechselwirkungsfläche für eine zuverlässiges Anordnung an dem Aufnahmeabschnitt der Halterung bietet und zugleich eine gewisse Flexibilität bei der räumlichen Ausrichtung des Zubehörteils an der Halterung ermöglicht.

Gemäß einer vorteilhaften Ausführungsform besitzt der Aufnahmeabschnitt die Form einer sich konisch verjüngenden Hülse. Dabei muss die Konizität nicht konstant, sondern kann auch variabel sein, d.h. dass der (senkrecht zur Kanalachse zu bestimmende) Durchmesser in Richtung der Kanalachse nicht linear, sondern in anderer Weise, insbesondere aber monoton, vom Eingangsabschnitt zum Verengungsabschnitt hin abnimmt. Die Querschnittsform eines solchen sich konisch verjüngenden Aufnahmeabschnitts kann dabei etwa kreisrund, elliptisch, ovalartig oder beispielsweise nach Art eines, insbesondere regelmäßigen, Vielecks, insbesondere mit abgerundeten Ecken, ausgebildet sein.

Des Weiteren ist vorgesehen, dass der Aufnahmeabschnitt die Form einer umfänglich offenen Hülse besitzt. Mit anderen Worten weist der durchgehende Kanal des Aufnahmeabschnitts eine seitliche, d.h. zur Kanalachse radiale Durchbrechung auf. Insbesondere verbindet diese Durchbrechung das erste Ende des durchgehenden Kanals mit dem zweiten Ende des durchgehenden Kanals zu einer gemeinsamen Öffnung.

Die seitliche Durchbrechung ist dabei dazu ausgebildet, ein seitliches Einbringen zumindest gewisser Abschnitte eines jeweiligen Zubehörteils, nicht aber des Halteabschnitts des Zubehörteils, in den durchgehenden Kanal zu ermöglichen. Hierzu weist die seitliche Durchbrechung in Umfangsrichtung bezogen auf die Kanalachse einen minimalen Abstand auf, der kleiner als ein Durchmesser des Kanals, insbesondere kleiner als ein Durchmesser des Eingangsabschnitts, ist.

Eine derartige Ausführung des Aufnahmeabschnitts als umfänglich offene Hülse ist insbesondere zweckmäßig, wenn die Halterung zur Befestigung eines Zweiradschlosses, das in geschlossener Form eine Schlaufe bildet, vorgesehen ist. Ein vergleichsweise schmaler oder dünner Abschnitt der geschlossenen Schlaufe kann dann durch die seitliche Durchbrechung hindurch in den durchgehenden Kanal eingeführt werden, wodurch das Zweiradschloss zunächst nur lose an der Halterung angeordnet wird. Anschließend kann das Zweiradschloss entlang der Kanalachse versetzt werden, bis der Halteabschnitt, der dicker als der genannte dünne Abschnitt ausgebildet ist und deshalb nicht durch die seitliche Durchbrechung geführt werden kann, durch den Eingangsabschnitt in den durchgehenden Kanal so weit, nämlich bis zur Begrenzung durch den Verengungsabschnitt, eingedrungen ist, dass das Zweiradschloss von der Halterung, insbesondere formschlüssig, zuverlässig gehalten wird.

Vergleichbare Vorteile ergeben sich für andere Zubehörteile, die eine geschlossene Schlaufe bilden oder länglich ausgebildet sind, wobei der Halteabschnitt gegenüber bezüglich der Erstreckung des Zubehörteils (zumindest in eine Richtung) benachbarten Abschnitten dicker, d.h. mit größerer Querschnittsfläche, ausgebildet ist, so dass das Zubehörteil mit einem der dünneren Abschnitte seitlich in den durchgehenden Kanal eingelegt werden kann und sich das Zubehörteil, wenn der Halteabschnitt entlang der Kanalachse in den durchgehenden Kanal des Aufnahmeabschnitts der Halterung eingesetzt ist, durch beide Enden des durchgehenden Kanals hindurch weiter erstrecken kann.

Ferner ist es vorteilhaft, wenn der durchgehende Kanal rotationssymmetrisch zu der Kanalachse ausgebildet ist. Dann nämlich braucht ein Zubehörteil mit einem entsprechend ausgebildeten Halteabschnitt nicht erst bezüglich einer Drehstellung relativ zur Kanalachse korrekt ausgerichtet zu werden, bevor es durch den Eingangsabschnitt in den durchgehenden Kanal eingeführt werden kann. Insbesondere können dann eine Innenfläche des Aufnahmeabschnitts und eine Außenfläche des Halteabschnitts unabhängig von einer Winkelausrichtung, d.h. Drehstellung des Halteabschnitts bezogen auf die Kanalachse, passgenau aneinander anliegen und/oder auf sonstige Weise zusammenwirken, wenn der Halteabschnitt bis zur Begrenzung durch den Verengungsabschnitt in den durchgehenden Kanal eingeführt ist. Dies erleichtert die Bedienung und erhöht die Flexibilität der Anordnung des Zubehörteils an der Halterung.

Des Weiteren ist an dem Aufnahmeabschnitt, insbesondere an einer Innenseite des Aufnahmeabschnitts, zumindest ein Führungselement ausgebildet, das sich in den Kanal erstreckt, um im Zusammenwirken mit einem jeweiligen entsprechenden Gegenelement am Halteabschnitt eines jeweiligen Zubehörteils das Einführen des Halteabschnitts in den durchgehenden Kanal zumindest bereichsweise zu führen. Die Führung kann beispielsweise darin bestehen, dass der Halteabschnitt des jeweiligen Zubehörteils in eine bestimmte Drehstellung relativ zu der Kanalachse hin gelenkt wird oder aber in einer einmal eingenommenen Drehstellung bei einem weiteren Einführen gehalten wird.

Grundsätzlich kann es dabei auch erforderlich sein, dass zunächst der Halteabschnitt, etwa von Hand, in eine passende, ein weiteres Einführen des Halteabschnitts in den durchgehenden Kanal ermöglichende Winkelausrichtung bewegt wird, dann aber durch das eine oder die mehreren Führungselemente beim weiteren Einführen in den durchgehenden Kanal in dieser Winkelausrichtung gehalten wird. Insofern haben die Führungselemente die Funktion einer Verdrehsicherung. Insbesondere wenn der Halteabschnitt des jeweiligen Zubehörteils nicht länglich oder wesentlich kürzer als der durchgehende Kanal ausgebildet ist, können die Führungselemente ferner dazu dienen, den Halteabschnitt entlang eines geeigneten Verlaufs durch den durchgehenden Kanal zu leiten, um etwa ein Verkeilen zu verhindern.

Beispielsweise kann ein jeweiliges Führungselement als Führungsvorsprung oder als Führungsnut ausgebildet sein. Dies stellt eine konstruktiv besonders einfache Umsetzung eines solchen Führungselements dar. Insbesondere kann, wenn das Führungselement als Führungsvorsprung ausgebildet ist, der Halteabschnitt eine im Wesentlichen komplementäre Führungsnut als mit dem Führungselement zusammenwirkendes Gegenelement aufweisen. Umgekehrt kann ein Gegenelement des Halteabschnitts als Führungsvorsprung ausgebildet sein, wenn ein jeweiliges Führungselement als Führungsnut ausgebildet ist.

Erfindungsgemäß ist das Führungselement so ausgebildet, dass es im Zusammenwirken mit dem jeweiligen Gegenelement am Halteabschnitt des jeweiligen Zubehörteils eine Einführbewegung des Halteabschnitts entlang der Kanalachse bis hin zur Begrenzung durch den Verengungsabschnitt zulässt, jedoch eine Änderung der Winkelausrichtung verhindert. Dies kann für den gesamten Verlauf des Einführens des Halteabschnitts vom Eingangsabschnitt bis zum Verengungsabschnitt der Fall sein oder aber nur für einen bestimmten Teilbereich des Verlaufs, der insbesondere zumindest das Erreichen der Begrenzung durch den Verengungsabschnitt umfasst, um den Halteabschnitt zumindest in dieser vollständig eingeführten Stellung bezüglich seiner Winkelausrichtung festzulegen. Gemäß einer bevorzugten Weiterbildung ist das Führungselement dazu ausgebildet, den ein jeweiliges entsprechendes Gegenelement aufweisenden Halteabschnitt eines jeweiligen Zubehörteils beim Einführen des Halteabschnitts in den durchgehenden Kanal bis zur Begrenzung durch den Verengungsabschnitt auf mehrere Winkelausrichtungen bezüglich der Kanalachse festzulegen.

Das Zusammenwirken des Führungselements mit dem jeweiligen Gegenelement kann dabei derart sein, dass überhaupt nur in einer Winkelausrichtung ein Erreichen der Begrenzung durch den Verengungsabschnitt möglich ist oder aber dass mehrere verschiedene, insbesondere regelmäßig beabstandete Winkelausrichtungen eingenommen werden können. Dabei kann es selbst zur Festlegung mehrerer verschiedener möglicher Winkelausrichtungen ausreichen, ein einziges Führungselement vorzusehen, wenn etwa an dem Halteabschnitt des jeweiligen Zubehörteils mehrere diesem einen Führungselement entsprechende, d.h. insbesondere komplementäre, Gegenelemente vorgesehen sind, von denen je nach Winkelausrichtung des Halteabschnitts ein jeweiliges mit dem einen Führungselement zusammenwirkt.

Eine Festlegung auf mehrere mögliche Winkelausrichtungen kann aber auch erreicht werden, indem der Aufnahmeabschnitt mehrere Führungselemente aufweist, wodurch zudem die Stabilität der Führung erhöht ist. Die mehreren Führungselemente sind dann vorzugsweise derart symmetrisch angeordnet, dass der entsprechende Gegenelemente aufweisende Halteabschnitt eines jeweiligen Zubehörteils in zumindest zwei verschiedenen Winkelausrichtungen bezüglich der Kanalachse bis zur Begrenzung durch den Verengungsabschnitt in den durchgehenden Kanal einführbar ist.

Dabei brauchen an dem Halteabschnitt des jeweiligen Zubehörteils nicht zwangsläufig ebensoviele Gegenelemente ausgebildet zu sein, wie Führungselemente an dem Aufnahmeabschnitt ausgebildet sind. Wenn es sich bei den Führungselementen des Aufnahmeabschnitts beispielsweise um Führungsnuten handelt, kann es ausreichen, wenn an dem Halteabschnitt lediglich ein einzelnes entsprechendes Gegenelement, nämlich ein geeigneter Führungsvorsprung, ausgebildet ist, der je nach Winkelausrichtung des Halteabschnitts in eine der Führungsnuten des Aufnahmeabschnitts eingreift. Wenn es sich hingegen bei den Führungselementen des Aufnahmeabschnitts um Führungsvorsprünge handelt, um mit entsprechenden Führungsnuten am Halteabschnitt des jeweiligen Zubehörteils zusammenzuwirken, können eine zumindest entsprechende Anzahl solcher Führungsnuten als Gegenelemente am Halteabschnitt erforderlich sein, damit jeder Führungsvorsprung in eine jeweilige Führungsnut eingreift und den Halteabschnitt nicht schon vor Erreichen der Begrenzung durch den Verengungsabschnitt beim Einführen des Halteabschnitts in den durchgehenden Kanal blockiert.

Wenn mehrere Führungselemente an dem Aufnahmeabschnitt vorgesehen sind, ist deren symmetrische Anordnung insofern vorteilhaft, als sie entsprechend dieser Symmetrie mehrere verschiedene Winkelanordnungen des Halteabschnitts in dem durchgehenden Kanal ermöglicht, ohne dass für die verschiedenen Winkelausrichtungen verschiedene Führungselemente vorgesehen sein müssten.

Wenn das Einführen des Halteabschnitts in den durchgehenden Kanal bis zur Begrenzung durch den Verengungsabschnitt auf mehrere Winkelausrichtungen festgelegt ist, ist es ferner vorteilhaft, wenn die Winkelausrichtungen zueinander Winkeldifferenzen von 45° oder 60° oder Vielfachen von 45° oder 60°, insbesondere 90°, aufweisen. Durch solche Winkeldifferenzen werden sinnvolle Abstufungen für eine flexible Anordnung eines jeweiligen Zubehörteils an der Halterung ermöglicht, ohne übermäßig viele Führungselemente vorsehen zu müssen. Beispielsweise können zumindest vier, vorzugsweise zumindest sechs, bevorzugt acht, insbesondere gleichmäßig verteilte, Winkelausrichtungen durch die Führungselemente vorgegeben sein, in denen sich der Halteabschnitt eines jeweiligen Zubehörteils befinden kann, wenn er bis zur Begrenzung durch den Verengungsabschnitt in den durchgehenden Kanal eingeführt ist, wohingegen andere Winkelausrichtungen dann nicht eingenommen werden können.

Zumindest eines der vorgesehenen Führungselemente kann zusätzlich zu der Funktion, den Halteabschnitt, beispielsweise im Zusammenwirken mit einem Gegenelement, zu führen und insbesondere auf eine oder mehrere jeweilige Winkelausrichtungen festzulegen, als zusätzliche Funktion aufweisen, als Anschlag mit dem Halteabschnitt des jeweiligen Zubehörteils zusammenzuwirken, um das Einführen des Halteabschnitts in den durchgehenden Kanal zu begrenzen. Hierfür kann das Führungselement einen Anschlagabschnitt aufweisen, der zu diesem Zweck ausgebildet ist.

Diese das Einführen des Halteabschnitts in den durchgehenden Kanal begrenzende Anschlagwirkung kann zusätzlich zu weiteren Querschnittsverengungen im Bereich des Verengungsabschnitts des durchgehenden Kanals vorgesehen sein. Beispielsweise kann zumindest im Bereich des Verengungsabschnitts an einer Innenseite des Aufnahmeabschnitts, insbesondere wenn er die Form einer sich konisch verjüngenden Hülse besitzt, eine Anschlagfläche ausgebildet sein, auf die der Halteabschnitt bei Erreichen der Begrenzung durch den Verengungsabschnitt trifft und die den Halteabschnitt an einem Austreten des Halteabschnitts aus dem durchgehenden Kanal an dessen zweitem Ende hindert. Grundsätzlich ist es aber auch möglich, dass allein der genannte an einem Führungselement ausgebildete Anschlagabschnitt die Verengung des Querschnitts des Verengungsabschnitts gegenüber dem Eingangsabschnitt bewirkt und somit den einzigen Anschlag bildet, der den Halteabschnitt an einem weiteren Einführen bzw. Austreten aus dem durchgehenden Kanal an dessen zweitem Ende hindert.

Für ein zuverlässiges Halten eines jeweiligen Zubehörteils mittels der Halterung ist es neben dem Aufnehmen des Halteabschnitts des Zubehörteils in den durchgehenden Kanal des Aufnahmeabschnitts und dem Begrenzen der Einführtiefe des Halteabschnitts mittels des Verengungsabschnitts vorteilhaft, wenn der Halteabschnitt zudem daran gehindert wird, den durchgehenden Kanal in umgekehrte Richtung, also durch den Eingangsabschnitt am ersten Ende des Kanals, wieder zu verlassen - zumindest solange dies nicht beabsichtigt erfolgt, etwa wenn das Zubehörteil wieder von der Halterung gelöst werden soll.

Gemäß einer bevorzugten Ausführungsform weist die Halterung daher ein Rastelement auf, das in einer Verriegelungsstellung rückfedernd, insbesondere senkrecht zu der Kanalachse, in den Kanal hineinragt, um den in den Kanal eingeführten Halteabschnitt des Zubehörteils zu verriegeln. Dazu kann das Rastelement beispielsweise in eine Rastausnehmung, insbesondere eine von mehreren Rastausnehmungen, an dem Halteabschnitt des jeweiligen Zubehörteils eingreifen, wodurch der Halteabschnitt in dem durchgehenden Kanal gegen ein Versetzen entlang der Kanalachse zumindest in Richtung zum Eingangsabschnitt am ersten Ende des Kanals hin gesperrt wird. Dieses Sperren erfolgt, insbesondere automatisch aufgrund der Rückfederung, zumindest dann, vorzugsweise ausschließlich dann, wenn der Halteabschnitt vollständig, d.h. bis zur Begrenzung durch den Verengungsabschnitt, in den durchgehenden Kanal eingeführt ist und also zugleich gegen ein weiteres Versetzen in Richtung zum Verengungsabschnitt am zweiten Ende des Kanals hin gesperrt ist. Mittels des Rastelements kann somit ein jeweiliges Zubehörteil zumindest bezüglich einer Bewegung entlang der Kanalachse positionsfest gehalten werden.

Wenn eine entsprechende Rastausnehmung an dem Halteabschnitt des Zubehörteils etwa als in Umfangsrichtung umlaufende Rastnut ausgebildet ist, kann der Halteabschnitt dabei zwar bezüglich einer Bewegung entlang der Kanalachse positionsfest, aber noch z.B. um die Kanalachse drehbeweglich sein. Das Rastelement und/oder der Halteabschnitt können aber auch so ausgebildet sein, dass das Zusammenwirken des Rastelements und des Halteabschnitts auch die Drehbeweglichkeit des Halteabschnitts in dem Aufnahmeabschnitt der Halterung eingeschränkt oder blockiert. Dies kann alternativ oder zusätzlich zu der beschriebenen Festlegung des Halteabschnitts auf jeweilige Winkelausrichtungen durch die genannten Führungselemente vorgesehen sein. Insbesondere kann das Rastelement auch als Führungselement in dem oben beschriebenen Sinne oder umgekehrt ein Führungselement zugleich als Rastelement ausgebildet sein und somit eine Doppelfunktion aufweisen.

Dadurch, dass das Rastelement zurückfedernd in die Verriegelungsstellung, in der es in den Kanal hineinragt, ausgebildet ist, kann das Rastelement so ausgebildet sein, dass es beim Einführen des Halteabschnitts in den durchgehenden Kanal durch den Halteabschnitt zurückgedrängt wird, damit das Rastelement das Einführen des Halteabschnitts nicht behindert. Vorzugsweise ist der Halteabschnitt dabei so ausgebildet, dass bei Erreichen der maximalen Einführtiefe des Halteabschnitts das Rastelement in seine Verriegelungsstellung zurückfedern kann, um z.B. eine Rastausnehmung des Halteabschnitts zu hintergreifen und den Halteabschnitt so gegen ein Herausbewegen aus dem durchgehenden Kanal in zu dem Einführen entgegengesetzte Richtung zu sperren. Damit das Rastelement, ohne beschädigt zu werden, von dem Halteabschnitt aus seiner Verriegelungsstellung gedrängt werden kann, kann das Rastelement eine für ein entsprechendes Zusammenwirken mit dem Halteabschnitt geeignete Flanke aufweisen, die insbesondere schräg zu der Kanalachse ausgerichtet ist.

Um ein unbeabsichtigtes Lösen des Zubehörteils von der Halterung zu verhindern, ist es ferner vorteilhaft, wenn das Rastelement im Wesentlichen ausschließlich aufgrund einer manuellen Betätigung aus seiner Verriegelungsstellung in einer Freigabestellung versetzbar ist. Daher ist es bevorzugt, wenn die Halterung wenigstens einen an einer Außenseite der Halterung zugänglichen Betätigungsabschnitt aufweist, wobei durch Betätigen des Betätigungsabschnitts das Rastelement aus dem Kanal heraus in eine Freigabestellung versetzbar ist, um den Halteabschnitt des Zubehörteils für ein Entnehmen aus dem Kanal freizugeben. Die Betätigung kann dabei insbesondere ein Drücken oder Ziehen des jeweiligen Betätigungsabschnitts umfassen.

Gemäß einer bevorzugten Weiterbildung umfasst die Halterung einen Grundkörper, an dem der Sockelabschnitt und der Aufnahmeabschnitt ausgebildet sind, ein Riegelteil und ein Befestigungsteil, wobei das Befestigungsteil eine Befestigungseinrichtung (z.B. mit Befestigungsmitteln wie den weiter oben genannten) zur Befestigung der Halterung an dem Zweirad aufweist, wobei das Riegelteil zwischen einer Unterseite des Sockelabschnitts und einer Oberseite des Befestigungsteils angeordnet ist und das Rastelement, den wenigstens einen Betätigungsabschnitt sowie einen Stegabschnitt aufweist, an dem das Rastelement angeformt ist, und wobei der wenigstens eine Betätigungsabschnitt an einem Ende des Stegabschnitts ausgebildet ist.

Das Rastelement ist bei dieser Ausführungsform also separat von dem Sockelabschnitt und dem Aufnahmeabschnitt, nämlich als Teil eines separaten Riegelteils ausgebildet. Da auch der genannte Betätigungsabschnitt an dem Riegelteil ausgebildet ist, ist das Riegelteil auch bezüglich seiner Funktion, den in den durchgehenden Kanal eingeführten Halteabschnitt eines jeweiligen Zubehörteils zu verriegeln bzw. bei Betätigung des Betätigungsabschnitts für ein Entnehmen aus dem Kanal freizugeben, unabhängig von dem Grundkörper der Halterung ausgebildet.

Vorzugsweise ist an zwei entgegengesetzten Enden des Stegabschnitts jeweils ein Betätigungsabschnitt vorgesehen. Dabei kann zum Versetzen des Rastelements in seine Freigabestellung die Betätigung eines einzelnen Betätigungsabschnitts ausreichen. Bevorzugt sind aber beide Betätigungsabschnitte zugleich, insbesondere in entgegengesetzte Richtung, vorzugsweise aufeinander zu, zu betätigen, um das Rastelement in seine Freigabestellung zu versetzen. Dadurch ist die Halterung gegen ein unbeabsichtigtes Freigeben eines jeweiligen Zubehörteils durch versehentliches Betätigen eines einzelnen Betätigungsabschnitts gesichert, aber dennoch einfach betätigbar.

Gemäß einer vorteilhaften Weiterbildung ist das Riegelteil dazu ausgebildet, dass eine Betätigung des Betätigungsabschnitts zu einer Biegung des Stegabschnitts führt, infolge deren das Rastelement in die Freigabestellung versetzt wird. Dazu kann das Rastelement in einem mittleren Bereich des Stegabschnitts an diesem angeformt sein und sich, insbesondere senkrecht zu einer Längserstreckung des Stegabschnitts, von dem Stegabschnitt weg und (in der Verriegelungsstellung) in den Kanal hinein erstrecken. Bei einem Biegen des Stegabschnitts infolge einer Betätigung des Betätigungsabschnitts wird der genannte mittlere Bereich des Stegabschnitts mit dem Rastelement dann vorteilhafterweise im Wesentlichen senkrecht zu der Längserstreckung des Stegabschnitts ausgelenkt, wodurch das Rastelement in die Freigabestellung versetzt wird. Dabei können jeweilige an entgegengesetzten Enden des Stegabschnitts ausgebildete Betätigungsabschnitte insbesondere dazu ausgebildet sein, bei Betätigung, etwa bei Druckbetätigung aufeinander zu, ein Biegemoment auf den Stegabschnitt auszuüben. Die Betätigung kann aber auch zu einer Krafteinwirkung in Richtung der Längserstreckung des Stegabschnitts führen, die bei Überschreiten der Knicklast des Stegabschnitts ein seitliches Ausweichen, also die zu erzielende Biegung, des Stegabschnitts bewirkt.

Gemäß einer bevorzugten Weiterbildung ist das Riegelteil allein durch ein Fixieren des Befestigungsteils an der Unterseite des Sockelabschnitts des Grundkörpers zwischen der Unterseite des Sockelabschnitts und der Oberseite des Befestigungsteils in einer Vertikalrichtung gefangen. Die Vertikalrichtung ist dabei dadurch definiert, dass die Unterseite des Sockelabschnitts oberhalb der Oberseite des Befestigungsteils angeordnet ist. Die Vertikalrichtung ist also insbesondere senkrecht zu der Unterseite des Sockelabschnitts bzw. der Oberseite des Befestigungsteils ausgerichtet.

Aufgrund der genannten Anordnung kann das Riegelteil bei einem Zusammenbau der Halterung einfach zunächst lose an dem Grundkörper, nämlich an der Unterseite des Sockelabschnitts, angelegt werden, ohne dass es hierfür irgendwelcher Haltemittel bedarf, da das Riegelteil anschließend dadurch sicher an der Halterung gehalten wird, dass das Befestigungsteil an dem Grundkörper fixiert wird und dabei das Riegelteil zwischen sich und dem Grundkörper hält. Hierdurch ergibt sich ein besonders einfacher Aufbau der Halterung mit wenigen Teilen und zudem einfacher Montage.

Um das Befestigungsteil an dem Grundkörper zu fixieren, können Schraubverbindungen oder sonstige stiftförmige Fixiermittel vorgesehen sein, die sich auch durch das Riegelteil hindurch erstrecken können. Dazu kann das Riegelteil eine oder mehrere entsprechende Durchgangsöffnungen, insbesondere in seinem Stegabschnitt aufweisen, die derart ausgebildet sind, dass ein Versetzen des Rastelements von einem durch eine jeweilige Durchgangsöffnung verlaufenden Fixiermittel nicht behindert wird. Durch eine solche Ausführung können das Riegelteil und insbesondere dessen Stegabschnitt für eine besonders hohe Stabilität und Langlebigkeit vergleichsweise groß ausgebildet sein, die Halterung insgesamt aber dennoch eine kompakte Bauform aufweisen.

Grundsätzlich unabhängig von vorstehend beschriebenen Ausführungsformen bezieht sich die Erfindung auch auf eine Halterung zur Befestigung eines Zubehörteils, insbesondere eines Zweiradschlosses, an einem Zweirad, die einen Grundkörper, ein Riegelteil und ein Befestigungsteil umfasst, wobei der Grundkörper einen Sockelabschnitt zur Verbindung mit dem Befestigungsteil und einen Aufnahmeabschnitt zur Aufnahme eines Halteabschnitts des Zubehörteils in einem Aufnahmebereich aufweist, wobei das Befestigungsteil eine Befestigungseinrichtung (wie beispielsweise eine Schelle) zur Befestigung der Halterung an dem Zweirad aufweist, wobei das Riegelteil zwischen einer Unterseite des Sockelabschnitts und einer Oberseite des Befestigungsteils angeordnet ist und einen Stegabschnitt, ein an dem Stegabschnitt angeformtes Rastelement und wenigstens einen an einem Ende des Stegabschnitts ausgebildeten, an einer Außenseite der Halterung zugänglichen Betätigungsabschnitt aufweist, wobei das Rastelement in einer Verriegelungsstellung rückfedernd in den Aufnahmebereich des Aufnahmeabschnitts des Grundkörpers hineinragt, um den in den Aufnahmebereich eingeführten Halteabschnitt des Zubehörteils zu verriegeln, und wobei durch Betätigen des Betätigungselements das Rastelement aus dem Aufnahmebereich heraus in eine Freigabestellung versetzbar ist, um den Halteabschnitt des Zubehörteils für ein Entnehmen aus dem Aufnahmebereich freizugeben, wobei insbesondere das Riegelteil allein durch ein Fixieren des Befestigungsteils an der Unterseite des Sockelabschnitts des Grundkörpers zwischen der Unterseite des Sockelabschnitts und der Oberseite des Befestigungsteils in einer Vertikalrichtung gefangen ist.

Eine derartige Halterung weist ferner vorzugsweise einzelne oder mehrere der zu den vorstehenden Ausführungsformen beschriebenen Merkmale auf. Beispielsweise handelt es sich bei dem genannten Aufnahmebereich des Aufnahmeabschnitts vorzugsweise um einen durchgehenden Kanal wie vorstehend beschrieben.

Des Weiteren wird die Aufgabe gelöst durch eine Anordnung umfassend ein Zubehörteil, insbesondere ein Zweiradschloss, mit einem, insbesondere zapfenförmigen, vorzugsweise integral an dem Zubehörteil ausgebildeten, Halteabschnitt und eine Halterung gemäß der vorstehenden Beschreibung, wobei der Aufnahmeabschnitt der Halterung und der Halteabschnitt des Zubehörteils zumindest im Wesentlichen komplementär zueinander ausgebildet sind. Der Aufnahmeabschnitt der Halterung und der Halteabschnitt des Zubehörteils sind also im Hinblick auf ein zuverlässiges Zusammenwirken aufeinander abgestimmt. Insbesondere wird durch die komplementäre Ausbildung eine passgenaue Aufnahme des Halteabschnitts des Zubehörteils in den Aufnahmeabschnitt der Halterung erreicht, wobei der Aufnahmeabschnitt der Halterung und der Halteabschnitt des Zubehörteils vorzugsweise weitgehend flächig aneinander zu liegen kommen, wenn der Halteabschnitt vollständig in den Aufnahmeabschnitt eingeführt ist. Eine integrale Ausbildung des Halteabschnitts an dem Zubehörteil hat zudem (wie auch zuvor erläutert) den Vorteil, dass der Halteabschnitt, wenn das Zubehörteil etwa bei Verwendung des Zubehörteils nicht an der Halterung angeordnet ist, unauffällig, so dass es nicht als für ein Zusammenwirken mit einer Halterung ausgebildeter Halteabschnitt erkennbar ist, und die Verwendung des Zubehörs nicht störend ausgebildet sein kann.

Die Erfindung wird nachfolgend lediglich beispielhaft unter Bezugnahme auf die Figuren näher erläutert.
- Fig. 1: zeigt in perspektivischer Darstellung eine erste Ausführungsform einer Halterung für ein Zweiradschloss zusammen mit dem Schlosskörper des Zweiradschlosses.
- Fig. 2: zeigt in perspektivischer Darstellung eine zweite Ausführungsform einer Halterung für ein Zweiradschloss mit von der Halterung gehaltenem Schlosskörper des Zweiradschlosses.
- Fig. 3A und 3B: zeigen die erste Ausführungsform in perspektivischen Schnittdarstellungen mit unterschiedlichen Schnittebenen.
- Fig. 4: zeigt in perspektivischer Darstellung die erste Ausführungsform aus einer Blickrichtung von schräg unten.

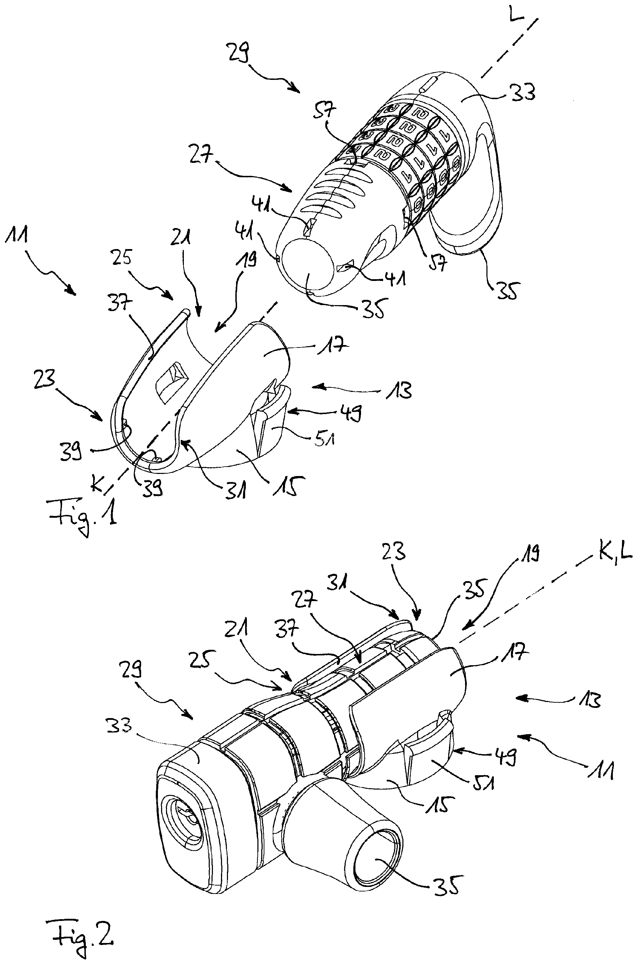

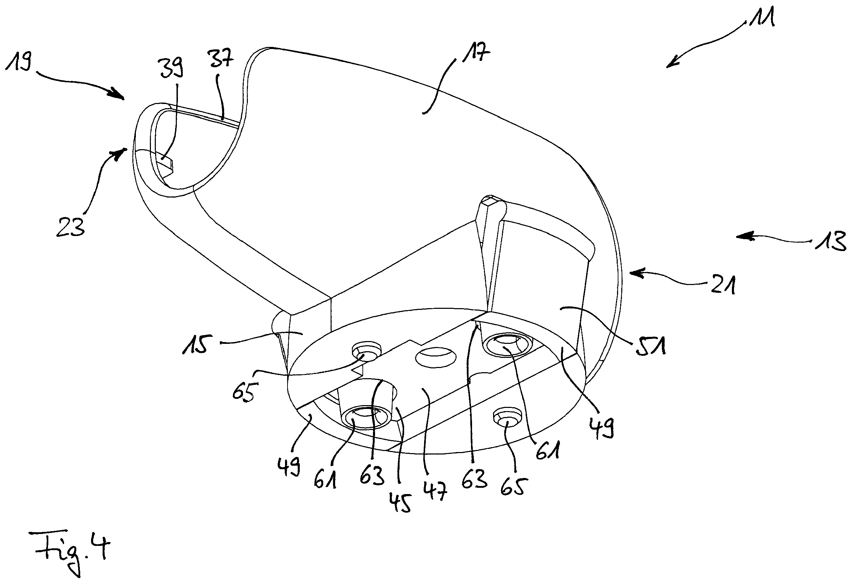

Die Fig. 1 und 2 zeigen jeweilige Ausführungsformen erfindungsgemäßer Halterungen 11, wobei einander entsprechende Elemente mit dem jeweils selben Bezugszeichen gekennzeichnet sind. Die Halterungen 11 umfassen jeweils einen Grundkörper 13 mit einem daran ausgebildeten Sockelabschnitt 15 zu Befestigung der Halterung 11 an einem Zweirad. Zu diesem Zweck ist die Unterseite des Sockelabschnitts 15 (vgl. Fig. 4) dazu ausgebildet ist, dass ein Befestigungsteil (nicht dargestellt) daran fixiert werden kann, welches eine Befestigungseinrichtung aufweist und über welches die Halterung 11 an dem Zweirad befestigt werden kann.

Entgegengesetzt zu der Unterseite des Sockelabschnitts 15 weist die Halterung 11 einen an dem Grundkörper 13 ausgebildeten Aufnahmeabschnitt 17 in Form einer sich im Wesentlichen konisch verjüngenden umfänglich offenen Hülse auf, deren Innenbereich einen durchgehenden Kanal 19 definiert. Der durchgehende Kanal 19 erstreckt sich durch die Hülse entlang einer Kanalachse K, zu der der Kanal 19 im Wesentlichen rotationssymmetrisch mit rundem Querschnitt ausgebildet ist, und ist zu beiden Enden 21, 23 seiner Erstreckung offen.

Die genannten konische Verjüngung des Aufnahmeabschnitts 17 ist nicht konstant, sondern weist einen geschwungenen Verlauf auf, wobei aber der (senkrecht zu der Kanalachse K zu bestimmende) Durchmesser des durchgehenden Kanals 19 monoton von einem ersten Ende 21 zu einem zweiten Ende 23 des Kanals 19 abnimmt. Am ersten Ende 21 ist dadurch ein Eingangsabschnitt 25 ausgebildet, durch den hindurch bzw. an dem vorbei ein zapfenförmiger Halteabschnitt 27 eines mittels der Halterung 11 zu haltenden Zubehörteils 29 in den durchgehenden Kanal 19 eingeführt werden kann.

An dem entgegengesetzten zweiten Ende 23 ist dagegen ein Verengungsabschnitt 31 ausgebildet, dessen Querschnitt aufgrund der genannten Verjüngung gegenüber dem Eingangsabschnitt 25 verengt ist. Insbesondere ist der Querschnitt des Verengungsabschnitts 31 wie auch der Querschnitt des Eingangsabschnitts 25 kreisrund allerdings mit kleinerem Durchmesser. Das hat zur Folge, dass der Halteabschnitt 27 des jeweiligen Zubehörteils 29 nicht durch den Verengungsabschnitt 31 bzw. an dem Verengungsabschnitt 31 vorbei an dem zweiten Ende 23 des durchgehenden Kanals 19 aus dem Kanal 19 wieder austreten kann.

Bei den in den Fig. 1 und 2 gezeigten Zubehörteilen 29 handelt es sich um Zweiradschlösser, von denen jeweils nur der Schlosskörper 33 dargestellt ist, an dem der jeweilige Halteabschnitt 27 als integraler Bestandteil ausgebildet ist. Insbesondere steht der Halteabschnitt 27 dabei nicht von dem übrigen Zubehörteil 29 ab, sondern ist in die Gesamtform (nämlich in den Schlosskörper 33) eingebettet. Bei dem in Fig. 1 gezeigten Zweiradschloss 29 handelt es sich um ein Zweiradschloss 29 mit Zahlenschloss, bei dem in Fig. 2 gezeigten dagegen um ein Zweiradschloss 29 mit mittels eines Schlüssels zu betätigendem Schließzylinder.

An dem Schlosskörper 33 des jeweiligen Zweiradschlosses 29 sind Kabelaufnahmen 35 ausgebildet, an denen die Enden eines jeweiligen nicht dargestellten Kabels (oder auch einer Glieder- oder Gelenkkette oder eines Bügels) des jeweiligen Zweiradschlosses 29 münden. Dabei ist der Schlosskörper 33 jeweils in seiner geschlossenen Stellung dargestellt, in der solche Zweiradschlösser 29 typischerweise an einem Zweirad gehalten werden sollen. Das jeweilige Kabel bildet in dieser Stellung zusammen mit dem Schlosskörper 33 eine geschlossene Schlaufe. Da der Halteabschnitt 27 integral an dem Schlosskörper 33 ausgebildet ist und bei den gezeigten Ausführungsformen im Wesentlichen durch einen Teil des Schlosskörpers 33 gebildet wird, bildet der Halteabschnitt 27 einen Bestandteil der genannten geschlossenen Schlaufe.

Damit ein derartig in das übrige Zubehörteil integrierter Halteabschnitt 27 eines jeweiligen Zubehörteils 29 auch dann in den durchgehenden Kanal 19 des Aufnahmeabschnitts 17 der Halterung 11 eingeführt werden kann, wenn das Zubehörteil eine geschlossenen Schlaufe bildet, weist der Aufnahmeabschnitt 17 eine sich parallel zur Kanalachse K erstreckende seitliche Durchbrechung 37 auf, die das erste Ende 21 mit dem zweiten Ende 23 des Aufnahmeabschnitts 17 verbindet und durch die hindurch zumindest hinreichend schmale Abschnitte der Schlaufe (z.B. das genannte Kabel eines der Zweiradschlösser 29 oder eines sonstigen Zweiradschlosses) seitlich in den durchgehenden Kanal 19 eingeführt werden können. Der Halteabschnitt 27 kann dagegen nicht durch die seitliche Durchbrechung 37, sondern lediglich über den Eingangsabschnitt 25 in den durchgehenden Kanal 19 eingeführt werden, da die Durchbrechung 37 so ausgelegt ist, dass sie enger als der Eingangsabschnitt 25 ist, also einen minimalen Durchlassabstand in Umfangsrichtung aufweist, der kleiner als ein Durchlassdurchmesser des Eingangsabschnitts 25 ist.

Wie in Fig. 2 dargestellt ist, kann der Halteabschnitt 27 in Richtung der Kanalachse K so weit in den durchgehenden Kanal 19 eingeführt werden, bis er aufgrund der Querschnittsverengung am Verengungsabschnitt 31 anschlägt und so auf die dargestellte Haltestellung begrenzt wird, in der das Zubehörteil 29 mit seinem Halteabschnitt 27 dann von dem Aufnahmeabschnitt 17 der Halterung 11 gehalten wird. Eine Innenfläche des Aufnahmeabschnitts 17 ist dabei vorzugweise zumindest im Wesentlichen passend komplementär zu einer Außenfläche des Halteabschnitts 27 ausgebildet, so dass diese in der gezeigten Haltestellung aneinander anliegen und flächig zusammenwirken können, um den Halteabschnitt 27 zuverlässig zu halten.

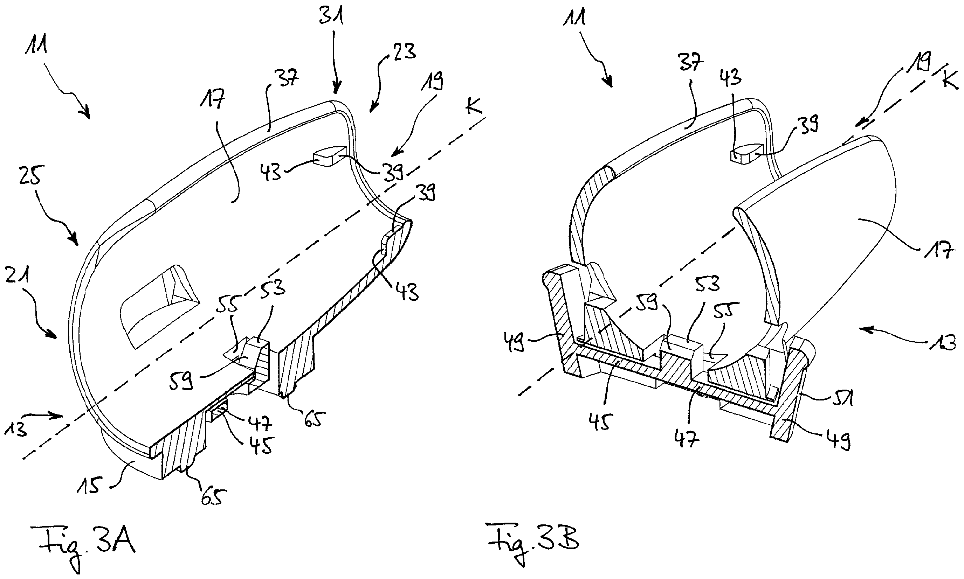

Wie in Fig. 1 und insbesondere auch in den Schnittdarstellungen dieser Ausführungsform in den Fig. 3A und 3B zu erkennen ist, sind an einer Innenseite des Aufnahmeabschnitts 17 Führungselemente 39 in Form von Führungsvorsprüngen ausgebildet, die sich in den durchgehenden Kanal 19 hinein erstrecken. Die Führungselemente 39 sind dazu ausgebildet, mit entsprechenden Gegenelementen 41 an dem Halteabschnitt 27 eines jeweiligen Zubehörteils 29 zusammenzuwirken. Diese Gegenelemente 41 werden bei dem in Fig. 1 gezeigten Zubehörteil 29 durch kurze Führungsnuten gebildet, die im Wesentlichen komplementär zu den Führungsvorsprüngen 39 des Aufnahmeabschnitts 17 ausgebildet sind, also von den Führungsvorsprüngen 39 vollständig ausgefüllt werden, wenn der Halteabschnitt 27 vollständig, d.h. bis zur Begrenzung durch den Verengungsabschnitt 31, in den Kanal 19 eingeführt ist. Dagegen sind die ebenfalls als Führungsnuten ausgebildeten Gegenelemente 41 des in Fig .2 gezeigten Zubehörteils 29 länger und erstrecken sich über den Halteabschnitt 27 hinaus auf den gesamten Schlosskörper 33.

Die Führungselemente 39 dienen dazu, den Halteabschnitt 27 in dem durchgehenden Kanal 19 auf eine gewisse beschränkte Anzahl von Winkelausrichtungen relativ zu der Kanalachse K festzulegen. Die Führungselemente 39 sind grundsätzlich wie dargestellt vorzugsweise im Bereich des Verengungsabschnitts 31 vorgesehen, so dass der Halteabschnitt 27 beim Einführen in den Kanal 19 zunächst bezüglich seiner Winkelausrichtung durch die Führungselemente 39 nicht eingeschränkt wird. Hat der Halteabschnitt 27 aber seine bis zum Verengungsabschnitt 31 eingeführte Haltestellung in einer der durch die Führungselemente 39 zugelassenen Winkelausrichtungen erreicht, wird er gegen eine Drehbewegung um die Kanalachse K aus dieser Winkelausrichtung heraus durch die Führungselemente 39 gesperrt. Insofern stellen die Führungselemente 39 eine Verdrehsicherung für den Haltabschnitt 27 dar.

Zudem sind an den Führungselementen 39 Anschlagabschnitte 43 ausgebildet, die senkrecht zur Kanalachse K ausgerichtet sind und zumindest bei der in Fig. 1 gezeigten Ausführungsform als Anschlag mit entsprechenden Flächen an den Gegenelementen 41 zusammenwirken. Dabei treffen die Gegenelemente 41 gerade dann auf die Anschlagabschnitte 43, wenn der Halteabschnitt 27 gerade bis zur Begrenzung durch den Verengungsabschnitt 31 in den durchgehenden Kanal 19 eingeführt ist. Somit tragen die Führungselemente 39 zur Verengung des Querschnitts des Verengungsabschnitts bei und unterstützen die Begrenzung der Beweglichkeit des Halteabschnitts 27 entlang der Kanalachse K in dem Kanal 19 durch den Verengungsabschnitt 31.

Bei den dargestellten Ausführungsformen sind an dem Aufnahmeabschnitt 17 jeweils drei Führungselemente 39 vorgesehen, die bezogen auf die Kanalachse K in Winkelabständen von 90° angeordnet sind. An den Halteabschnitten 27 der jeweiligen Zubehörteile 29 sind vier für ein Zusammenwirken mit den Führungselementen 39 ausgebildete Gegenelemente 41 vorgesehen, die bezogen auf eine Längsachse L des Halteabschnitts 27, die bei in den Kanal 19 eingeführtem Halteabschnitt 27 mit der Kanalachse K zusammenfällt, ebenfalls in Winkelabständen von 90° zueinander angeordnet sind. Dadurch wird der jeweilige Halteabschnitt 27 auf vier mögliche Winkelausrichtungen festgelegt, in denen er relativ zur Kanalachse K ausgerichtet sein kann, wenn er bis zur Begrenzung durch den Verengungsabschnitt 31 in den durchgehenden Kanal 19 eingeführt ist.

Grundsätzlich würde zur Festlegung auf (in diesem Fall) vier mögliche Winkelausrichtungen ein einzelnes Führungselement 39 an dem Aufnahmeabschnitt 17 ausreichen, das je nach Winkelausrichtung mit einem jeweils anderen der Gegenelemente 41 zusammenwirkt. Dadurch, dass aber mehrere Führungselemente 39 mit einem jeweiligen Gegenelement 41 zusammenwirken, wird eine stabilere Festlegung der Winkelausrichtung erzielt. Die verschiedenen möglichen Winkelausrichtungen sind dabei wie bei den dargestellten Ausführungsformen vorteilhafterweise gleichmäßig über den gesamten Winkelbereich verteilt, damit die Ausrichtung der Anordnung des jeweiligen Zubehörteils 29 an dem Zweirad möglichst flexibel einstellbar ist.

In den Schnittdarstellungen der Fig. 3A und 3B, welche dieselbe Ausführungsform zeigen wie Fig. 1, ist zu erkennen, dass die Halterung 11 ein Riegelteil 45 umfasst, das an einer Unterseite des Sockelabschnitts 15 angeordnet ist. Das Riegelteil 45 weist einen flächig ausgebildeten länglichen Stegabschnitt 47 auf, der sich im Wesentlichen über die gesamte Breite der Halterung 11 bzw. einen Durchmesser des Sockelabschnitts 15 erstreckt und in an dem Sockelabschnitt 15 angeordnetem Zustand quer zum Verlauf des durchgehenden Kanals 19 ausgerichtet ist.

An beiden Enden der Längserstreckung des Stegabschnitts 47 ist ein jeweiliger flächiger Betätigungsabschnitt 49 ausgebildet, der annähernd senkrecht zur Längserstreckung des Stegabschnitts 47 ausgerichtet ist und dessen von dem Stegabschnitt 47 weg weisende Flachseite eine Betätigungsfläche 51 bildet. Die Enden des Stegabschnitts 47 treffen dabei dezentral auf den jeweiligen Betätigungsabschnitt 49, so dass bei einer zentralen Krafteinwirkung auf die Betätigungsfläche 51 eines jeweiligen Betätigungsabschnitts 49 in Richtung der Längserstreckung des Stegabschnitts 47 ein Biegemoment auf den Stegabschnitt 47 ausgeübt wird, infolge dessen sich der Stegabschnitt 47 biegt.

Das Riegelteil 45 umfasst ferner ein Rastelement 53, das mittig bezüglich der Längserstreckung des Stegabschnitts 47 an diesem angeformt ist. Das Rastelement 53 erstreckt sich dabei senkrecht von einer Flachseite des Stegabschnitts 47 weg und ragt, wenn der Stegabschnitt 47 frei von von den Betätigungsabschnitten 49 ausgehenden Krafteinwirkungen und somit ungebogen ist, durch eine Öffnung 55, die den Sockelabschnitt 15 und den Aufnahmeabschnitt 17 durchbricht, bis in den durchgehenden Kanal 19 hinein. Diese in den Fig. 3A und 3B gezeigte Stellung stellt eine Verriegelungsstellung des Rastelements 53 dar, da das Rastelement 53 dadurch, dass es in den durchgehenden Kanal 19 hineinragt, in eine von vorzugsweise mehreren an dem Halteabschnitt 27 des jeweilige Zubehörteils 29 ausgebildeten Rastausnehmungen 57 eingreifen kann, um den in den Kanal 19 vollständig eingeführten Halteabschnitt 27 zu verriegeln, d.h. in dieser vollständig eingeführten Stellung gegen ein Versetzen in Richtung der Kanalachse K zu sperren. Dabei sind die mehreren Rastausnehmungen 57 vorteilhafterweise in denselben Winkelabständen bezüglich der Längsachse L zueinander angeordnet, die auch die Führungselemente 39 zueinander aufweisen, damit unabhängig davon, welche der von den Führungselements 39 vorgegebenen Winkelausrichtungen der Halteabschnitt 27 einnimmt, ein Eingreifen des Rastelements 53 in eine jeweilige Rastausnehmung 57 möglich ist.

Wenn durch Drücken auf die beiden Betätigungsflächen 51 der Betätigungsabschnitte 49 des Riegelteils 45 der Stegabschnitt 47 gebogen wird, wird dadurch das Rastelement 53 aus dem durchgehenden Kanal 19 bewegt und somit gegebenenfalls außer Eingriff mit einer jeweiligen Rastausnehmung 57 eines Halteabschnitts 27 eines jeweiligen Zubehörteils 29 gebracht. Dies entspricht dann einer Freigabestellung des Rastelements 53, in der ein in den durchgehenden Kanal 19 vollständig eingeführter Halteabschnitt 27wieder entgegengesetzt, also in Richtung des Eingangsabschnitts 25 des Aufnahmeabschnitts 17, bewegt werden kann, um den Halteabschnitt 27 von der Halterung 11 zu lösen.

Damit das Rastelement 53 lediglich ein Lösen, nicht aber auch das Einführen des Halteabschnitts 27 blockiert, wenn es sich in seiner Verriegelungsstellung befindet, weist das Rastelement 53 eine Flanke 59 auf, die derart schräg zur Kanalachse K ausgerichtet ist, dass ein Halteabschnitt 27, der in den durchgehenden Kanal 19 eingeführt wird, auf die Flanke 59 trifft und die dadurch auf die Flanke 59 ausgeübte Kraft zu einem Versetzen des Rastelements 53 aus dem durchgehenden Kanal 19 hinaus führt. Da hierdurch ohne Betätigung der Betätigungsabschnitte 49 der Stegabschnitt 47 gebogen wird, erfolgt das Versetzen des Rastelements 53 gegen die aufgrund der Biegung des Stegabschnitts 47 vorliegende Vorspannung, die das Rastelement 53 zurück in seine Verriegelungsstellung drängt, sobald eine geeignete Rastausnehmung 57 am Halteabschnitt 27 mit der Öffnung 55 fluchtet, was vorteilhafterweise gerade dann der Fall ist, wenn der Halteabschnitt 27 bis zur Begrenzung durch den Verengungsabschnitt 31 in den durchgehenden Kanal 19 eingeführt ist, so dass der Halteabschnitt 27 dann zuverlässig in dieser Stellung gehalten wird.

Somit wirken verschiedene Elemente für eine besonders zuverlässige Befestigung des jeweiligen Zubehörteils 29 an der Halterung 11 zusammen: Durch die Hülsenform des Aufnahmeabschnitts 17 der Halterung 11 wird zunächst die räumliche Ausrichtung des Halteabschnitts 27 des jeweiligen Zubehörteils 29 koaxial zu der Kanalachse K festlegt, so dass ein Bewegen des Halteabschnitts 27 nur entlang der Kanalachse K oder um die Kanalachse K herum erfolgen kann. Die Bewegung entlang der Kanalachse K wird durch den Verengungsabschnitt 31 in Richtung des zweiten Endes 23 des durchgehenden Kanals 19 auf eine maximale Einführtiefe begrenzt, so dass der Halteabschnitt 27 an dem zweiten Ende 23 nicht aus dem Kanal 19 austreten kann. In entgegengesetzte Richtung wird eine Bewegung entlang der Kanalachse K (zumindest nach Erreichen dieser maximalen Einführtiefe) durch das Rastelement 53 begrenzt, so dass der Halteabschnitt 27 dann axial unbeweglich in dem Kanal 19 des Aufnahmeabschnitts 17 gehalten wird. Die Führungsmittel 39 schließlich haben das Einführen des Halteabschnitts 27 bis in die maximale Einführtiefe nur in einer jeweiligen aus einer gewissen Anzahl festgelegter Winkelausrichtungen zugelassen und sperren den Halteabschnitt 27 nun gegen eine Drehbewegung um die Kanalachse K, so dass der Halteabschnitt 27 insgesamt positions- und drehfest relativ zu dem Aufnahmeabschnitt 17 an der Halterung 11 gehalten wird.

In Fig. 4 ist die auch in den Fig. 1 sowie 3A und 3B gezeigte Ausführungsform einer Halterung 11 aus einer Blickrichtung gezeigt, aus der die Unterseite des Sockelabschnitts 15 zu sehen ist. Es ist zu erkennen, dass das Riegelteil 45 im Wesentlichen lose an der Unterseite des Sockelabschnitts 15 angeordnet ist. Zur Fixierung eines (nicht dargestellten) Befestigungsteils an dem Sockelabschnitt 15 weist der Sockelabschnitt 15 an seiner Unterseite Schraubaufnahmen 61 auf, die sich durch Durchgangsöffnungen 63 in Form von Rundlöchern im Stegabschnitt 47 des Riegelteils 45 hindurch erstrecken. An diesen Schraubaufnahmen 61 kann ein Befestigungsteil mit Fixiermitteln wie z.B. Schrauben fixiert werden, so dass dann das Riegelteil 45 allein durch die Fixierung des Befestigungsteils an dem Sockelabschnitt 15 zwischen der Unterseite des Sockelabschnitts 15 und der Oberseite des Befestigungsteils in einer Vertikalrichtung, also senkrecht zu der Unterseite des Sockelabschnitts 15, gefangen ist. Des Weiteren sind an der Unterseite des Sockelabschnitts 15 Verdrehsicherungszapfen 65 vorgesehen, welche im Zusammenwirken mit entsprechenden Verdrehsicherungsaufnahmen am Befestigungsabschnitt die Fixierung des Befestigungsabschnitts an dem Sockelabschnitt 15 weiter stabilisieren.

Durch eine derartige Ausbildung mit grundsätzlich loser Lagerung des Riegelteils 45 an dem Sockelabschnitt 15, aber mit zuverlässiger Sicherung des Riegelteils 45 durch die Fixierung des Befestigungsteils an dem Sockelabschnitt 15 werden ein einfacher Zusammenbau sowie eine kompakte Bauweise der Halterung 11 bei besonders einfacher Bedienbarkeit des Rastmechanismus erreicht.

### Bezugszeichenliste

- 11: Halterung
- 13: Grundkörper
- 15: Sockelabschnitt
- 17: Aufnahmeabschnitt
- 19: durchgehender Kanal
- 21: erstes Ende
- 23: zweites Ende
- 25: Eingangsabschnitt
- 27: Halteabschnitt
- 29: Zubehörteil
- 31: Verengungsabschnitt
- 33: Schlosskörper
- 35: Kabelaufnahme
- 37: seitliche Durchbrechung
- 39: Führungselement
- 41: Gegenelement
- 43: Anschlagabschnitt
- 45: Riegelteil
- 47: Stegabschnitt
- 49: Betätigungsabschnitt
- 51: Betätigungsfläche
- 53: Rastelement
- 55: Öffnung
- 57: Rastausnehmung
- 59: Flanke
- 61: Schraubaufnahme
- 63: Durchgangsöffnung
- 65: Verdrehsicherungszapfen
- K: Kanalachse
- L: Längsachse

## Patentansprüche

1. Halterung (11) zur Befestigung eines Zubehörteils (29), insbesondere eines Zweiradschlosses, an einem Zweirad,
mit einem Sockelabschnitt (15) zur Befestigung der Halterung (11) an dem Zweirad und einem Aufnahmeabschnitt (17) zur Aufnahme eines, insbesondere zapfenförmigen, Halteabschnitts (27) des Zubehörteils (29), wobei der Aufnahmeabschnitt (17) einen entlang einer Kanalachse (K) verlaufenden durchgehenden Kanal (19) aufweist, der an einem ersten Ende (21) einen Eingangsabschnitt (25) zum Einführen des Halteabschnitts (27) des Zubehörteils (29) in den durchgehenden Kanal (19) sowie an einem dem ersten Ende (21) entgegengesetzten zweiten Ende (23) einen Verengungsabschnitt (31) aufweist, dessen Querschnitt gegenüber dem Eingangsabschnitt (25) verengt ist, um das Einführen des Halteabschnitts (27) des Zubehörteils (29) in den durchgehenden Kanal (19) zu begrenzen,
wobei der Aufnahmeabschnitt (17) die Form einer umfänglich offenen Hülse besitzt,
wobei an dem Aufnahmeabschnitt (17), insbesondere an einer Innenseite des Aufnahmeabschnitts (17), zumindest ein Führungselement (39) ausgebildet ist, das sich in den Kanal (19) erstreckt, um im Zusammenwirken mit einem jeweiligen entsprechenden Gegenelement (41) am Halteabschnitt (27) eines jeweiligen Zubehörteils (29) das Einführen des Halteabschnitts (27) in den durchgehenden Kanal (19) zumindest bereichsweise zu führen, wobei das Führungselement (39) so ausgebildet ist, dass es im Zusammenwirken mit dem jeweiligen Gegenelement (41) eine Einführbewegung des Halteabschnitts (27) entlang der Kanalachse (K) bis hin zur Begrenzung durch den Verengungsabschnitt (25) zulässt, jedoch eine Änderung der Winkelausrichtung verhindert.

2. Halterung nach Anspruch 1,
wobei der Aufnahmeabschnitt (17) die Form einer sich konisch verjüngenden Hülse besitzt.

3. Halterung nach Anspruch 1 oder 2,
wobei der durchgehende Kanal (19) rotationssymmetrisch zu der Kanalachse (K) ausgebildet ist.

4. Halterung nach zumindest einem der vorstehenden Ansprüche,
wobei das Führungselement (39) als Führungsvorsprung oder als Führungsnut ausgebildet ist.

5. Halterung nach zumindest einem der vorstehenden Ansprüche,
wobei das Führungselement (39) dazu ausgebildet ist, den ein jeweiliges entsprechendes Gegenelement (41) aufweisenden Halteabschnitt (27) eines jeweiligen Zubehörteils (29) beim Einführen des Halteabschnitts (27) in den durchgehenden Kanal (19) bis zur Begrenzung durch den Verengungsabschnitt (31) auf mehrere Winkelausrichtungen bezüglich der Kanalachse (K) festzulegen.

6. Halterung nach zumindest einem der vorstehenden Ansprüche,
wobei der Aufnahmeabschnitt (17) mehrere Führungselemente (39) aufweist, die derart symmetrisch angeordnet sind, dass der entsprechende Gegenelemente (41) aufweisende Halteabschnitt (27) eines jeweiligen Zubehörteils (29) in zumindest zwei verschiedenen Winkelausrichtungen bezüglich der Kanalachse (K) bis zur Begrenzung durch den Verengungsabschnitt (31) in den durchgehenden Kanal (19) einführbar ist.

7. Halterung nach Anspruch 5 oder 6,
wobei die genannten Winkelausrichtungen zueinander Winkeldifferenzen von 45° oder 60° oder Vielfachen von 45° oder 60°, insbesondere 90°, aufweisen.

8. Halterung nach zumindest einem der vorstehenden Ansprüche,
wobei das Führungselement (39) einen Anschlagabschnitt (43) aufweist, der dazu ausgebildet ist, als Anschlag mit dem Halteabschnitt (27) eines jeweiligen Zubehörteils (29) zusammenzuwirken, um das Einführen des Halteabschnitts (27) in den durchgehenden Kanal (19) zu begrenzen.

9. Halterung nach zumindest einem der vorstehenden Ansprüche,
wobei die Halterung (11) ein Rastelement (53) aufweist, das in einer Verriegelungsstellung rückfedernd, insbesondere senkrecht zu der Kanalachse (K), in den Kanal (19) hineinragt, um den in den Kanal (19) eingeführten Halteabschnitt (27) des Zubehörteils (29) zu verriegeln.

10. Halterung nach Anspruch 9,
wobei die Halterung (11) wenigstens einen an einer Außenseite der Halterung (11) zugänglichen Betätigungsabschnitt (49) aufweist, wobei durch Betätigen des Betätigungsabschnitts (49) das Rastelement (53) aus dem Kanal (19) heraus in eine Freigabestellung versetzbar ist, um den Halteabschnitt (27) des Zubehörteils (29) für ein Entnehmen aus dem Kanal (19) freizugeben.

11. Halterung nach Anspruch 10,
wobei die Halterung (11) einen Grundkörper (13), an dem der Sockelabschnitt (15) und der Aufnahmeabschnitt (17) ausgebildet sind, ein Riegelteil (45) und ein Befestigungsteil umfasst,
wobei das Befestigungsteil eine Befestigungseinrichtung zur Befestigung der Halterung (11) an dem Zweirad aufweist,
wobei das Riegelteil (45) zwischen einer Unterseite des Sockelabschnitts (15) und einer Oberseite des Befestigungsteils angeordnet ist und das Rastelement (53), den wenigstens einen Betätigungsabschnitt (49) sowie einen Stegabschnitt (47) aufweist, an dem das Rastelement (53) angeformt ist,
und wobei der wenigstens eine Betätigungsabschnitt (49) an einem Ende des Stegabschnitts (47) ausgebildet ist.

12. Halterung nach Anspruch 11,
wobei das Riegelteil (45) dazu ausgebildet ist, dass eine Betätigung des Betätigungsabschnitts (49) zu einer Biegung des Stegabschnitts (47) führt, infolge deren das Rastelement (53) in die Freigabestellung versetzt wird.

13. Halterung nach Anspruch 11 oder 12,
wobei das Riegelteil (45) allein durch ein Fixieren des Befestigungsteils an der Unterseite des Sockelabschnitts (15) des Grundkörpers (13) zwischen der Unterseite des Sockelabschnitts (15) und der Oberseite des Befestigungsteils in einer Vertikalrichtung gefangen ist.

14. Anordnung umfassend ein Zubehörteil (29), insbesondere ein Zweiradschloss, mit einem, insbesondere zapfenförmigen, vorzugsweise integral an dem Zubehörteil ausgebildeten, Halteabschnitt (27) und eine Halterung (11) nach zumindest einem der vorstehenden Ansprüche zur Befestigung des Zubehörteils (29) an einem Zweirad,
wobei der Aufnahmeabschnitt (17) der Halterung (11) und der Halteabschnitt (27) des Zubehörteils (29) zumindest im Wesentlichen komplementär zueinander ausgebildet sind.

## Claims

1. A holder (11) for fastening an accessory part (29), in particular a two-wheeler lock, to a two-wheeler,
comprising a base section (15) for fastening the holder (11) to the two-wheeler and a reception section (17) for receiving a holding section (27), in particular a spigot-shaped holding section, of the accessory part (29), wherein the reception section (17) has a continuous passage (19) which extends along a passage axis (K) and which has an inlet section (25) at a first end (21) for introducing the holding section (27) of the accessory part (29) into the continuous passage (19) as well as a constriction section (31) at a second end (23) opposite the first end (21), the cross-section of said constriction section (31) being constricted with respect to the inlet section (25) to limit the introduction of the holding section (27) of the accessory part (29) into the continuous passage (19),
wherein the reception section (17) has the shape of a circumferentially open sleeve;
wherein at least one guide element (39) which extends into the passage (19) is formed at the reception section (17), in particular at an inner side of the reception section (17), to guide the introduction of the holding section (27) at least regionally into the continuous passage (19) in cooperation with a respective corresponding counter-element (41) at the holding section (27) of a respective accessory part (29); and wherein the guide element (39) is configured such that, in cooperation with the respective counter-element (41), it allows an introduction movement of the holding section (27) along the passage axis (K) up to the limitation by the constriction section (31), but prevents any change to the angular orientation.

2. A holder in accordance with claim 1,
wherein the reception section (17) has the shape of a conically tapering sleeve.

3. A holder in accordance with claim 1 or claim 2,
wherein the continuous passage (19) is rotationally symmetrical with respect to the passage axis (K).

4. A holder in accordance with at least one of the preceding claims,
wherein the guide element (39) is configured as a guide projection or as a guide groove.

5. A holder in accordance with at least one of the preceding claims,
wherein the guide element (39) is configured to fix the holding section (27) of a respective accessory part (29) having a respective corresponding counter-element (41) on the introduction of the holding section (27) into the continuous passage (19) up to the limitation by the constriction section (31) to a plurality of angular orientations with respect to the passage axis (K).

6. A holder in accordance with at least one of the preceding claims,
wherein the reception section (17) has a plurality of guide elements (39) which are arranged symmetrically such that the holding section (27) of a respective accessory part (29) having corresponding counter-elements (41) can be introduced into the continuous passage (19) in at least two different angular orientations with respect to the passage axis (K) up to the limitation by the constriction section (31).

7. A holder in accordance with claim 5 or claim 6,
wherein said angular orientations have angular differences with respect to one another of 45° or 60° or multiples of 45° or 60°, in particular 90°.

8. A holder in accordance with at least one of the preceding claims,
wherein the guide element (39) has an abutment section (43) which is configured to cooperate as an abutment with the holding section (27) of a respective accessory part (29) to limit the introduction of the holding section (27) into the continuous passage (19).

9. A holder in accordance with at least one of the preceding claims,
wherein the holder (11) has a latch element (53) which projects resiliently into the passage (19) in a locking position, in particular perpendicular to the passage axis (K), to lock the holding section (27) of the accessory part (29) introduced into the passage (19).

10. A holder in accordance with claim 9,
wherein the holder (11) has at least one actuation section (49) accessible at an outer side of the holder (11), wherein the latch element (53) can be displaced out of the passage (19) into a release position by actuating the actuation section (49) to release the holding section (27) of the accessory part (29) for a removal from the passage (19).

11. A holder in accordance with claim 10,
wherein the holder (11) comprises a base body (13) at which the base section (15) and the reception section (17) are formed, a latching part (45) and a fastening part;
wherein the fastening part has a fastening device for fastening the holder (11) to the two-wheeler;
wherein the latching part (45) is arranged between a lower side of the base section (15) and an upper side of the fastening part and the latch element (53) has the at least one actuation section (49) as well as a web section (47) at which the latch element (53) is molded;
and wherein the at least one actuation section (49) is formed at an end of the web section (47).

12. A holder in accordance with claim 11,
wherein the latching part (45) is configured such that an actuation of the actuation section (49) results in a bending of the web section (47) as a result of which the latch element (53) is displaced into the release position.

13. A holder in accordance with claim 11 or claim 12,
wherein the latching part (45) is solely captured by a fixing of the fastening part at the lower side of the base section (15) of the base body (13) between the lower side of the base section (15) and the upper side of the fastening part in a vertical direction.

14. An arrangement comprising an accessory part (29), in particular a two-wheeler lock, having a holding section (27), in particular of spigot shape and preferably formed integrally at the accessory part, and a holder (11) in accordance with at least one of the preceding claims for fastening the accessory part (29) to a two-wheeler,
wherein the reception section (17) of the holder (11) and the holding section (27) of the accessory part (29) are formed in at least a substantially complementary manner to one another.

## Revendications

1. Support (11) pour la fixation d'un accessoire (29), en particulier d'un antivol pour deux-roues, sur un deux-roues,
comportant une portion formant socle (15) pour la fixation du support (11) sur le deux-roues, et une portion de réception (17) pour recevoir une portion de retenue (27), en particulier en forme de tenon, de l'accessoire (29), dans lequel
la portion de réception (17) présente un canal continu (19) qui s'étend le long d'un axe de canal (K) et qui présente, à une première extrémité (21), une portion d'entrée (25) pour introduire la portion de retenue (27) de l'accessoire (29) dans le canal continu (19), et, à une seconde extrémité (23) opposée à la première extrémité (21), une portion de rétrécissement (31) dont la section transversale est rétrécie par rapport à la portion d'entrée (25) pour limiter l'introduction de la portion de retenue (27) de l'accessoire (29) dans le canal continu (19), la portion de réception (17) ayant la forme d'un manchon ouvert sur la périphérie,
au moins un élément de guidage (39) est réalisé sur la portion de réception (17), en particulier sur un côté intérieur de la portion de réception (17), et s'étend jusque dans le canal (19), afin de guider au moins localement l'insertion de la portion de retenue (27) dans le canal continu (19), en coopération avec un élément antagoniste correspondant respectif (41) situé sur la portion de retenue (27) d'un accessoire respectif (29),
l'élément de guidage (39) est réalisé de telle sorte que, en coopération avec l'élément antagoniste respectif (41), il permet un mouvement d'insertion de la portion de retenue (27) le long de l'axe de canal (K) jusqu'à la délimitation par la portion de rétrécissement (25), mais empêche un changement de l'orientation angulaire.

2. Support selon la revendication 1,
dans lequel
la portion de réception (17) a la forme d'un manchon qui va en se rétrécissant coniquement.

3. Support selon la revendication 1 ou 2,
dans lequel
le canal continu (19) est réalisé à symétrie de révolution par rapport à l'axe de canal (K).

4. Support selon l'une au moins des revendications précédentes,
dans lequel
l'élément de guidage (39) est réalisé sous forme de saillie de guidage ou sous forme de rainure de guidage.

5. Support selon l'une au moins des revendications précédentes,
dans lequel
l'élément de guidage (39) est réalisé pour immobiliser la portion de retenue (27), comprenant un élément antagoniste correspondant respectif (41), d'un accessoire respectif (29) à plusieurs orientations angulaires par rapport à l'axe de canal (K), lors de l'insertion de la portion de retenue (27) dans le canal continu (19) jusqu'à la délimitation par la portion de rétrécissement (31).

6. Support selon l'une au moins des revendications précédentes,
dans lequel
la portion de réception (17) présente plusieurs éléments de guidage (39) qui sont disposés symétriquement de telle sorte que la portion de retenue (27), comprenant des éléments antagonistes correspondants (41), d'un accessoire respectif (29) est susceptible d'être insérée dans le canal continu (19) jusqu'à la délimitation par la portion de rétrécissement (31), dans au moins deux orientations angulaires différentes par rapport à l'axe de canal (K).

7. Support selon la revendication 5 ou 6,
dans lequel
lesdites orientations angulaires présentent des différences angulaires de 45° ou de 60° ou des multiples de 45° ou de 60°, en particulier de 90°.

8. Support selon l'une au moins des revendications précédentes,
dans lequel
l'élément de guidage (39) comprend une portion de butée (43) qui est réalisée pour coopérer, en tant que butée, avec la portion de retenue (27) d'un accessoire respectif (29), afin de délimiter l'insertion de la portion de retenue (27) dans le canal continu (19).

9. Support selon l'une au moins des revendications précédentes,
dans lequel
le support (11) comprend un élément d'enclenchement (53) qui pénètre dans le canal (19) avec effet de ressort dans une position de verrouillage, en particulier perpendiculairement à l'axe de canal (K), afin de verrouiller la portion de retenue (27) de l'accessoire (29) insérée dans le canal (19).

10. Support selon la revendication 9,
dans lequel
le support (11) comprend au moins une portion d'actionnement (49) accessible sur un côté extérieur du support (11), l'élément d'enclenchement (53) pouvant être décalé hors du canal (19) jusque dans une position de libération par actionnement de la portion d'actionnement (49), afin de libérer la portion de retenue (27) de l'accessoire (29) en vue d'un retrait hors du canal (19).

11. Support selon la revendication 10,
dans lequel
le support (11) comprend un corps de base (13) sur lequel sont réalisées la portion formant socle (15) et la portion de réception (17), ainsi qu'une partie de verrouillage (45) et une partie de fixation,
la partie de fixation comprend un moyen de fixation pour fixer le support (11) au deux-roues,
la partie de verrouillage (45) est agencée entre une face inférieure de la portion formant socle (15) et une face supérieure de la partie de fixation, et comprend l'élément d'enclenchement (53), ladite au moins une portion d'actionnement (49) ainsi qu'une portion d'âme (47) sur laquelle est conformé l'élément d'enclenchement (53),
et ladite au moins une portion d'actionnement (49) est réalisée à une extrémité de la portion d'âme (47).

12. Support selon la revendication 11,
dans lequel
la partie de verrouillage (45) est réalisée de telle sorte qu'un actionnement de la portion d'actionnement (49) provoque une flexion de la portion d'âme (47) suite à laquelle l'élément d'enclenchement (53) est décalé jusque dans la position de libération.

13. Support selon la revendication 11 ou 12,
dans lequel
la partie de verrouillage (45) est emprisonnée entre la face inférieure de la portion formant socle (15) et la face supérieure de la partie de fixation, dans une direction verticale, rien que par une fixation de la partie de fixation sur la face inférieure de la portion formant socle (15) du corps de base (13).

14. Ensemble comprenant un accessoire (29), en particulier un antivol pour deux-roues, comportant une portion de retenue (27), en particulier en forme de tenon, réalisée de préférence intégralement sur l'accessoire (29), et un support selon l'une au moins des revendications précédentes pour la fixation de l'accessoire (29) sur le deux-roues,
dans lequel
la portion de réception (17) du support (11) et la portion de retenue (27) de l'accessoire (29) sont réalisées au moins sensiblement de façon complémentaire l'une par rapport à l'autre.
